# EUROPEAN PATENT APPLICATION

(11) **EP 1 845 064 A1**
(43) Date of publication of application: **17.10.2007**
(21) Application number: 06712772.0
(22) Date of filing: 01.02.2006
(51) Int. Cl.: C01B 31/02, C08K 9/02, C08L 101/00

(54) **CARBON NANOTUBE-LOADED INORGANIC PARTICLE**

(30) Priority: 02.02.2005 JP 2005026126
(71) Applicant: OTSUKA CHEMICAL COMPANY, LTD., Osaka-shi, Osaka 540-0021 (JP)
(72) Inventor: TANI, Masato, 2-chome, Chiyoda-ku, Tokyo, 1010048 (JP); TOSA, Hiroyoshi, 2-chome, Chiyoda-ku, Tokyo, 1010048 (JP); GOTO, Toshiki, 2-chome, Chiyoda-ku, Tokyo, 1010048 (JP)
(74) Representative: Merkle, Gebhard
(86) International application number: PCT/JP2006/301629
(87) International publication number: WO 2006/082829

(57) **Abstract**

Disclosed is a carbon nanotube-loaded inorganic particle which exhibits excellent reinforcing performance when blended in resins or the like. Specifically disclosed is a carbon nanotube-loaded inorganic particle **characterized in that** the surface of an inorganic particle is loaded with carbon nanotubes. This carbon nanotube-loaded inorganic particle can be produced by loading the surface of a fiber-like or plate-like inorganic particle of potassium titanate or wollastonite with fine particles of an iron catalyst and growing carbon nanotubes on the surface of the inorganic particle by a polystyrene method or the like.

## Description

### TECHNICAL FIELD

The present invention relates to carbon nanotube-loaded inorganic particles which exhibit superior reinforcing performance when incorporated in a resin or the like.

### BACKGROUND ART

In recent years, extensive research and development on carbon nanotubes have been conducted. Patent Literature 1 proposes a method wherein irradiation of a surface portion of a carboneous solid, such as graphite, fullerene carbon or amorphous carbon, with an ion beam under high vacuum results in the production of carbon nanotubes on the irradiated surface portion. In Patent Literature 1, an electron heat source element is discussed which uses, as an electron releasing material, a carboneous material having carbon nanotubes formed on a surface portion of the carboneous solid.

Patent Literature 2 proposes a thermoplastic resin composition which incorporates, as an electroconductor, hollow carbon fibrils, such as carbon nanotubes, in a thermoplastic resin.

However, no discussion has been provided as to loading the surface of inorganic particle with carbon nanotubes. Also, no discussion has been provided heretofore as to incorporating carbon nanotube-loaded inorganic particles in a resin.
Patent Literature 1: Patent Laid-Open No. Hei 9-221309
Patent Literature 2: Patent Laid-Open No. 2002-146206

### DISCLOSURE OF THE INVENTION

It is an object of the present invention to provide carbon nanotube-loaded inorganic particles which show superior reinforcing performance when incorporated in a resin or the like.

The carbon nanotube-loaded inorganic particle of the present invention is characterized in that the surface of the inorganic particle is loaded with carbon nanotubes.

The carbon nanotube-loaded inorganic particles of the present invention, when incorporated in a resin or the like, impart enhanced flexural strength and impact strength and thus improved strength to the resin or the like.

Also, the carbon nanotube-loaded inorganic particle of the present invention, because of its good electroconductive property, imparts electroconductivity to the resin or the like.

The inorganic particle for use in the present invention is not particularly specified in type, but can be illustrated by a metal oxide particle. When incorporated in a resin or the like primarily for reinforcement, the inorganic particles are preferably used in the fibrous or platy form. Examples of such fibrous or platy inorganic particles include fibrous or platy potassium titanate and wollastonite.

The method by which the surface of inorganic particle is loaded with carbon nanotubes is not particularly specified. One exemplary method involves allowing the inorganic particle to support on its surface a catalyst for production of carbon nanotubes. This supported catalyst is utilized to produce and grow carbon nanotubes from the surface of inorganic particle.

Examples of useful catalysts to be supported on the surface of inorganic particle include compounds containing at least one element from Cr, Mn, Fe, Co, Ni, Cu, Zn, Mo, In, Sn, Al and Pt, such as metals, metal oxides, metal hydroxides and metal carbides. Among them, oxides and hydroxides of Fe, Ni and Co are superior catalysts, because of their tendency to be readily supported, and thus can form carbon nanotubes on their surfaces efficiently.

The aforesaid catalysts can be supported on the surface of inorganic particle by methods such as sputtering, vacuum deposition, CVD and plating. The simplest and most practical method is to immerse inorganic or metal oxide particles in a solution of a compound of a catalyst metal.

The catalyst metal can be supported on the surface of inorganic particle simply by immersing it in the solution, separating and then drying or firing. There is a method which assures more reliable support. In the case where the inorganic or metal oxide particle contains an alkaline metal or alkaline earth metal element, immersion of those inorganic or metal oxide particles in the catalyst compound solution results in the substitution of the alkaline metal or alkaline earth metal element for the catalyst metal. According to this method, the catalyst metal is efficiently fixed on surfaces of these particles. Also, if the metal compound is to serve as a catalyst to form carbon nanotubes, it must be supported in the form of fine particles. An effective method is to immerse the inorganic particles or metal oxide particles in a colloidal sol prepared via hydrolysis or the like of the catalyst compound. For example, mere immersion of wollastonite in an aqueous solution of ferric chloride enables support of an iron catalyst. In this case, Ca present at the surface of wollastonite is replaced by Fe ions in the solution. As a result, fine particles of iron hydroxide or iron oxide are formed and supported on the surface.

On the other hand, dropping the aqueous solution of ferric chloride in a boiled water results in the formation of a fine particle sol of iron hydroxide or iron oxide. Immersion of platy potassium lithium titanate in this sol, followed by separation and drying or firing, allows support of an iron oxide fine particle catalyst. This method enables such support even in the absence of a base at a surface of an inorganic or metal oxide particle and thus can be applied to a wide variety of inorganic or metal oxide particles.

A CVD process can be used to produce and grow carbon nanotubes on the surface of inorganic particle that supports the catalyst. The CVD process in this case can use not only a mixed gas containing a hydrocarbon gas, such as ethane, ethylene or acetylene, and an inert gas such as nitrogen, helium or argon, which has been general in the production of carbon nanotubes, but also a hydrocarbon compound that assumes a liquid form at normal temperature, such as ethanol or toluene, and a hydrocarbon that assumes a solid form at normal temperature, such as polystyrene. In view of large-scale synthesis, the latter process is rather desirable. For example, the carbon nanotube-loaded inorganic or metal oxide particles can be synthesized by mixing the iron catalyst-loaded wollastonite that supports an iron oxide catalyst thereon, as described in the preceding section, with a polystyrene resin powder and heating the mixture under nitrogen atmosphere to 700 °C or above. For successful synthesis, the ratio in amount of polystyrene to wollastonite is at least 0.01, on the basis of a unit amount of the wollastonite. In view of efficiency, it is preferably 0.1 - 10. The CVD temperature is preferably 800 - 1,000°C.

Carbon nanotubes can also be produced by a combustion process which utilizes a heat and a combustion gas generated via combustion of a hydrocarbon gas. According to this process, catalyst-deposited inorganic particles are contacted with a flame produced via imperfect combustion of a hydrocarbon gas such as propane or ethylene, so that the combustion gas is used as a carbon source, while a combustion heat is utilized to heat the catalyst-deposited inorganic particles, for production of carbon nanotubes on surfaces of the inorganic particles. For example, the same process as described above in the preparation of the iron-based catalyst-deposited wollastonite can be used, while using nickel chloride or nickel acetate in place of ferric chloride, to prepare wollastonite that supports nickel oxide or nickel hydroxide deposited thereon. This wollastonite is contacted for at least 1 minute, preferably about 15 minutes, with a flame produced by burning a mixed gas containing air and ethylene at a ratio by volume of not greater than 10, preferably not greater than 7, by means of a gas burner, so that carbon nanotubes can be produced on its surface. The temperature during this process is 500 - 900 °C, preferably 600 - 800 °C. When the inorganic particles, subsequent to production of carbon nanotubes, are brought out of contact with the flame, if the carbon nanotubes while hot are contacted with air, they are caused to burn. It is therefore desirable that they are cooled to 500 °C or below while either prevented from contact with air or contacted with an inert gas, such as nitrogen, argon or helium.

The production method of the present invention is for producing carbon nanotubes on a surface of a catalyst-deposited inorganic particle by the aforesaid CVD or combustion process and characterized as including the steps of contacting a metal compound, which serves as a catalyst for production of carbon nanotubes, with an inorganic particle for deposition of the catalyst on a surface of the inorganic particle; contacting the catalyst-deposited inorganic particle, while heated to 500 - 1,000 °C, with a hydrocarbon or carbon monoxide to produce carbon nanotubes on the surface of the inorganic particle, and subsequent to production of carbon nanotubes, cooling the produced carbon nanotubes to 500 °C or below.

In the case where the CVD process is utilized, a high polymer can be used as a carbon source.
In the case where the combustion process is utilized to produce carbon nanotubes, the inorganic particle is heated by a combustion reaction of a hydrocarbon and an oxygen-containing gas and concurrently contacted with a hydrocarbon or carbon monoxide for production of the carbon nanotubes.

In the present invention, the amount of the carbon nanotubes supported and deposited on the surface of inorganic particle can be controlled such as by the amount of the supported catalyst, the amount of the inert gas supplied, the type and amount of the hydrocarbon, the reaction temperature and time.

If the amount of the carbon nanotubes deposited is excessively small, the reinforcing effect to a resin or the like diminishes. On the other hand, the excessive large amount thereof leads likely to poor dispersion. The ratio in amount of the deposited carbon nanotubes to the inorganic particle or metal oxide particle is preferably in the approximate range of 0.01 - 10. Particularly when it is in the approximate range of 0.05 - 1, not only efficient production is attained, but also sufficient reinforcing effect is obtained.

The amount of the carbon nanotubes deposited can be determined as by thermal analysis. It can be determined, for example, from a heat loss up to about 700 °C in the thermal analysis.

In the present invention, the inorganic particle for support of carbon nanotubes can be illustrated by fibrous or platy potassium titanate and wollastonite, as described above. Other applicable inorganic particles include mica, talc, glass flake, platy hydrotalcite, platy boehmite, platy alumina, glass fiber, ceramic fiber, fibrous aluminum borate and fibrous titanium oxide. However, the present invention is not limited thereto.

The method used to incorporate the carbon nanotube-loaded inorganic particles of the present invention in a resin or the like is not particularly specified. However, because the carbon nanotube-loaded inorganic particles of the present invention are generally difficult to disperse in a resin or the like, the following method is preferably used.

That is, it is preferred that the carbon nanotube-loaded inorganic particles of the present invention are incorporated in a resin or the like by preparing a premixture containing the carbon nanotube-loaded inorganic particles dispersed therein in a high concentration and mixing this premixture in the resin or the like. For example, the carbon nanotube-loaded inorganic particles may be pervasively dispersed in a solvent capable of dissolving the resin such as by a method that subjects them to supersonic vibration. Thereafter, the resin is added to this dispersion for dissolution therein. The subsequent drying and desolvating results in the preparation of the premixture. By mixing the prepared premixture in the resin, a resin composition can be obtained in which the carbon nanotube-loaded inorganic powder of the present invention is well dispersed.

The resin composition of the present invention is characterized in that it contains the carbon nanotube-loaded inorganic powder of the present invention.

The carbon nanotube-loaded inorganic particles are preferably contained within the range of 1 - 99 % by weight, more preferably within the range of 5 - 50 % by weight.

An excellent reinforcing effect can be obtained by incorporating the carbon nanotube-loaded inorganic particles of the present invention in a resin or the like.

### BRIEF DESCRIPTION OF THE DRAWINGS

[Figure 1] Figure 1 is a photomicrograph taken using a scanning electron microscope, showing carbon nanotube-loaded wollastonite obtained in the Example in accordance with the present invention.
[Figure 2] Figure 2 is a thermogravimetric-differential thermal analysis measurement chart for the carbon nanotube-loaded wollastonite obtained in the Example in accordance with the present invention.
[Figure 3] Figure 3 is a schematic sectional view, showing a CVD apparatus employed to heat the carbon nanotube-loaded wollastonite in the Example in accordance with the present invention.
[Figure 4] Figure 4 is a photomicrograph taken using a scanning electron microscope, showing carbon nanotube-loaded, platy potassium lithium titanate obtained in the Example in accordance with the present invention.
[Figure 5] Figure 5 is a front view, showing a production apparatus employed in a combustion process to produce carbon nanotubes in the Example in accordance with the present invention.
[Figure 6] Figure 6 is a side view, showing the production apparatus employed in a combustion process to produce carbon nanotubes in the Example in accordance with the present invention.
[Figure 7] Figure 7 is a photomicrograph taken using a scanning electron microscope, showing carbon nanotube-loaded wollastonite obtained in the Example in accordance with the present invention.

### EXPLANATION OF REFERENCE NUMERALS

- 1: CVD apparatus
- 2: silica tube
- 3: gas inlet pipe
- 4: gas outlet pipe
- 5: magnetic dish
- 6: catalyst-deposited wollastonite
- 10: stainless steel mesh cylinder
- 11: barrier wall
- 12: burner
- 13: flame

### BEST MODE FOR CARRYING OUT THE INVENTION

The present invention is below described in more detail by way of Examples. It will be recognized that the following examples merely illustrate the practice of the present invention but are not intended to be limiting thereof. Suitable changes and modifications can be effected without departing from the scope of the present invention.

### (SYNTHESIS EXAMPLE 1)

A 0.01 mole/liter aqueous solution of ferric chloride was heated to about 50 °C. 10 g of wollastonite was added to 1 liter of this aqueous ferric chloride solution and immersed therein under agitation for about 1 hour. Agitation was terminated to precipitate wollastonite. After a supernatant was confirmed to have turned colorless and transparent, the supernatant was poured out. Thereafter, the precipitation slurry was washed using a decantation. This decantation washing was repeated five times using warm water. After filtration, a brown-colored cake-like precipitate was obtained. This was dried for 1 hour at 120 °C and then disintegrated using a mortar and a 40-mesh screen. As a result, a wollastonite powder carrying a fine particle iron catalyst on its surface was obtained.

### (EXAMPLE 1)

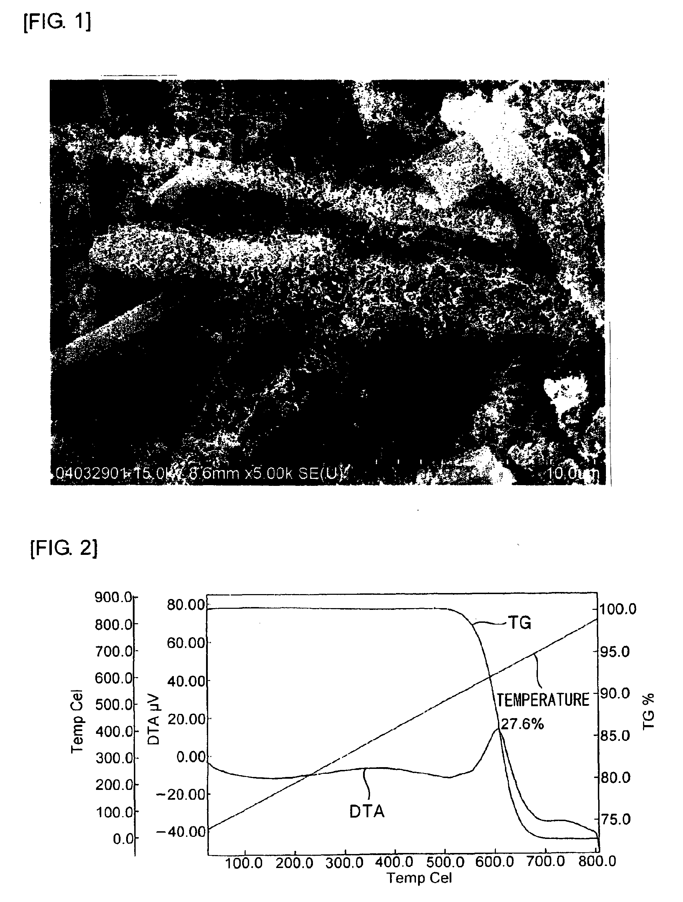

1 g of the wollastonite powder carrying a fine particle iron catalyst on its surface, as obtained in the Synthesis Example 1, was mixed with 10 g of a first-grade reagent of styrene. The mixture was spread over a square magnetic dish which was subsequently placed in a silica tube of a CVD apparatus shown in Figure 1. As shown in Figure 1, the silica tube 2 is inserted in the CVD apparatus 1. The silica tube 2 is provided with a gas inlet pipe 3 for introducing a gas and a gas outlet pipe 4 for discharging the gas. The magnetic dish 5, over which the wollastonite powder 6 with a fine particle iron catalyst supported on its surface was spread, was placed at a center inside the silica tube 2. An interior of the silica tube 2 was heated while introducing a nitrogen gas through the gas inlet pipe 3 and discharging a gas inside the silica tube 2 through the gas outlet pipe 4. The silica tube 2 is about 70 mm in diameter and 1,200 mm in length. A flow rate of the nitrogen gas was 20 ml/minute. The interior of the silica tube was heated to 900 °C at a temperature increasing rate of 20 °C/min, maintained at 900 °C for 1 hour and then allowed to cool naturally.

The above-described operation resulted in obtaining a black powder. This black powder was observed with a scanning electron microscope (SEM).

Figure 1 is a microphotograph taken using a scanning electron microscope, showing the obtained black powder. As can be clearly seen from Figure 1, a surface of the wollastonite was confirmed to have been loaded with many carbon nanotubes.

Figure 2 is a graph which shows measurement results of thermogravimetric-differential thermal analysis (TG-DTA) for the obtained carbon nanotube-loaded inorganic particle. As can be clearly seen from Figure 2, a heat loss up to about 700 °C is 27.6 %. Accordingly, the amount of the carbon nanotubes deposited is regarded as being 27.6 % by weight.

### (EXAMPLE 2)

5 g of the carbon nanotube-loaded wollastonite obtained in Example 1 was dispersed in 100 ml of a tetrahydrofuran reagent using a magnetic stirrer and a supersonic cleaner. Thereafter, 5 g of a polycarbonate resin (product name "Upiron E-2000", product of Mitsubishi Engineering Co., Ltd.) was added to this slurry. Using a magnetic stirrer and a supersonic cleaner, this resin was dissolved in the solvent.

This slurry was stirred while heated to 50 - 80 °C to vaporize tetrahydrofuran as the solvent, so that 10 g of a premixture was prepared. Then, 40 g of the above polycarbonate resin was added to 10 g of the premixture. The mixture was kneaded at 270 °C at 50 rpm for 10 minutes using a small-size kneader ("Labo Plastomill" manufactured by Toyo Seiki, Ltd.) to obtain a bulky polycarbonate composite material containing 10 % by weight of the carbon nanotube-loaded wollastonite.

This polycarbonate composite material was crushed by a small-size crusher (product of Horai Co., Ltd.) into 5 - 10 mm chips which were subsequently processed through an injection molder to provide flexural strength test pieces and Izod impact resistance test pieces, 5 pieces for each test.

Using the obtained test pieces, flexural strength and Izod impact strength were measured by an autograph and an Izod impact resistance measuring device. The measurement results are shown in Table 1.

### (COMPARATIVE EXAMPLE 1)

In place of the carbon nanotube-loaded wollastonite in Example 1, wollastonite left unloaded with carbon nanotubes, i. e. , raw wollastonite was used in the amount of 5 g. Otherwise, the procedure of Example 2 was followed to prepare a premixture. Using this premixture, a polycarbonate resin composition was prepared in the same manner as in Example 2.

The flexural strength and Izod impact strength of the obtained polycarbonate resin composition were measured in the same manner as in Example 2. The measurement results are shown in Table 1.

### (COMPARATIVE EXAMPLE 2)

Without using the carbon nanotube-loaded wollastonite in Example 1, 5 g of the polycarbonate resin alone was dissolved in 100 ml of tetrahydrofuran. Subsequent to the dissolution, tetrahydrofuran was vaporized to redeposit the resin. 5 g of this redeposited resin was added to 45 g of a polycarbonate resin. The mixture was kneaded in the same manner as in Example 2 to prepare test pieces made solely of the polycarbonate resin in the same manner as in Example 2.

Using the test pieces such obtained, the flexural strength and I zod impact strength were measured in the same manner as in Example 2. The measurement results are shown in Table 1.

**[TABLE 1]**

| | Example 1 | Comparative Example 1 | Comparative Example 2 |
|---|---|---|---|
| Flexural Strength (MPa) | 108.3 | 89.8 | 96.7 |
| lzod Impact Strength (notched) (J/M) | 5.6 | 5.2 | 14.0 |

As can be clearly seen from the test results shown in Table 1, the use of the carbon nanotube-loaded wollastonite in accordance with the present invention not only improves flexural strength but also prevents deterioration of impact strength.

### (SYNTHESIS EXAMPLE 2)

100 ml of a 0.1 mole/liter aqueous solution of ferric chloride was prepared and dropped to 800 ml water while boiled. After dropping completed, boiling was continued for about 1 hour. The mixture was then allowed to cool, placed in a 1, 000 ml measuring flask and filled up to a marked line to obtain a transparent red liquid. 10 g of platy potassium lithium titanate (TERRACESS of Otsuka Chemical Co. , Ltd.) was added to this transparent red liquid. After an hour of stirring, the liquid was washed five times with warm water using a decantation and then filtered to obtain a brown cake. This brown cake was dried for 1 hour at 120 °C and then disintegrated using a mortar and a 40-mesh screen. As a result, platy potassium lithium titanate carrying a fine particle iron oxide catalyst on its surface was obtained.

### (EXAMPLE 3)

1 g of the platy potassium lithium titanate carrying an iron oxide catalyst thereon, as obtained in Synthesis Example 2, and 10 g of a first-grade reagent of polystyrene were mixed and spread over a square magnetic dish. Thereafter, the procedure of Example 1 was followed to obtain a black powder and observe it with a scanning electron microscope.

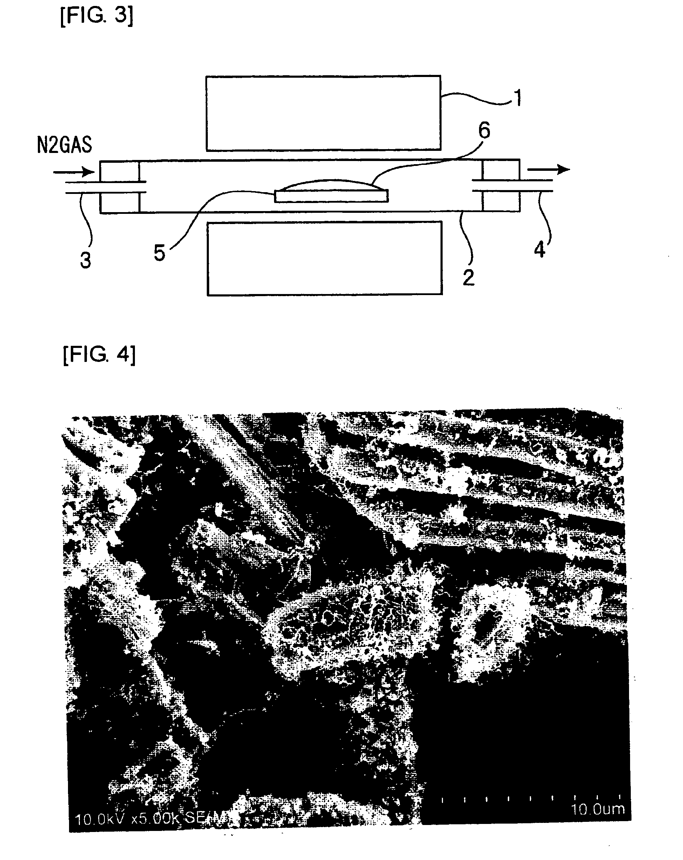

Figure 4 isamicrophotographof the obtained black powder, when taken using a scanning electron microscope. As can be clearly seen from Figure 4, the surface of the platy potassium lithium titanate has been confirmed to be loaded with carbon nanotubes.

### (SYNTHESIS EXAMPLE 3)

10 g of wollastonite was added to 1 liter of a 0.01 mole/liter aqueous solution of nickel nitrate while heated at about 50 °C and immersed therein with stirring for about an hour. The stirring was then terminated to allow precipitation. After a supernatant was confirmed to have turned nearly colorless and transparent, this slurry was washed five times with warm water using a decantation to obtain a light green-colored cake-like precipitate was obtained. This precipitate was dried for one hour at 120 °C and then disintegrated using a mortar and a 40-mesh screen. As a result, a wollastonite powder carrying a fine particle nickel catalyst on its surface was obtained.

### (EXAMPLE 4)

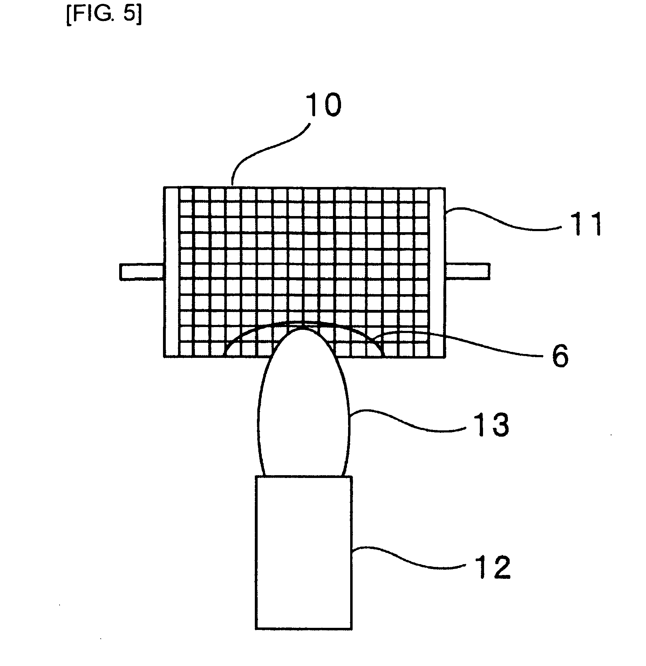

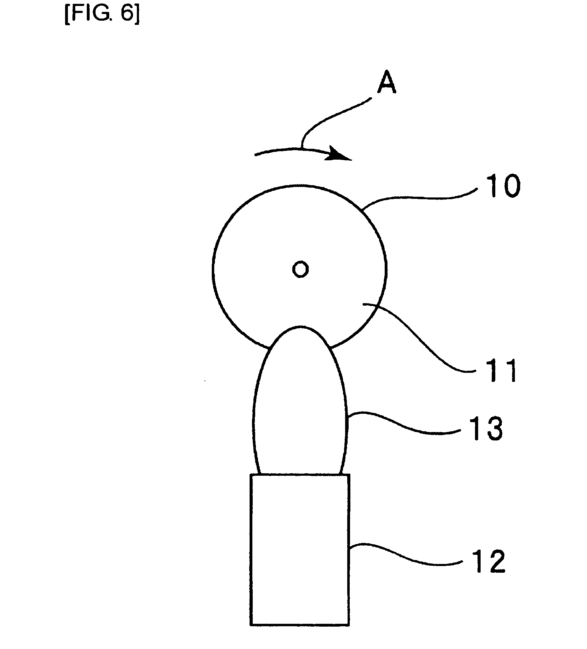

The apparatus shown in Figures 5 and 6 was utilized to produce carbon nanotubes on the surface of the wollastonite powder carrying the catalyst, as obtained in Synthesis Example 3, by a combustion process. Figure 5 is a front view and Figure 6 is a side view.
As shown in Figures 5 and 6, a barrier wall 11 is provided at each end of a cylinder 10 made of a stainless steel mesh. This wollastonite 6 carrying the catalyst is placed inside the cylinder 10 made of a stainless steel mesh. A burner 12 is located below the cylinder 10 so that the wollastonite 6 carrying the catalyst can be exposed to a flame 13 produced at the burner 12. During a reaction, the cylinder 10 is rotated in the direction shown by the arrow A to stir the wollastonite 6 carrying the catalyst inside the cylinder 10.

4.5 g of the wollastonite carrying the catalyst, as obtained in Synthesis Example 3, was placed inside the cylinder 10, as described above, and reacted by rotating the cylinder 10 and concurrently supplying a mixed gas containing ethylene and air at a ratio by volume of 2:10 to the burner 12 where it was burned such that the wollastonite carrying the catalyst was exposed for about 15 minutes at 650 °C to a flame 13 produced at the burner 12. Subsequent to the reaction, supply of the ethylene/air mixed gas was stopped. Immediately thereafter, a nitrogen gas was blown to cool the wollastonite. After a red-hot condition disappeared, a temperature measurement was initiated. When the temperature was confirmed to have dropped to 500 °C or below, cooling by the nitrogen gas was terminated.

A product was removed from the cylinder 10. Metering revealed a weight of 5 g. The obtained product was observed with a scanning electron microscope.

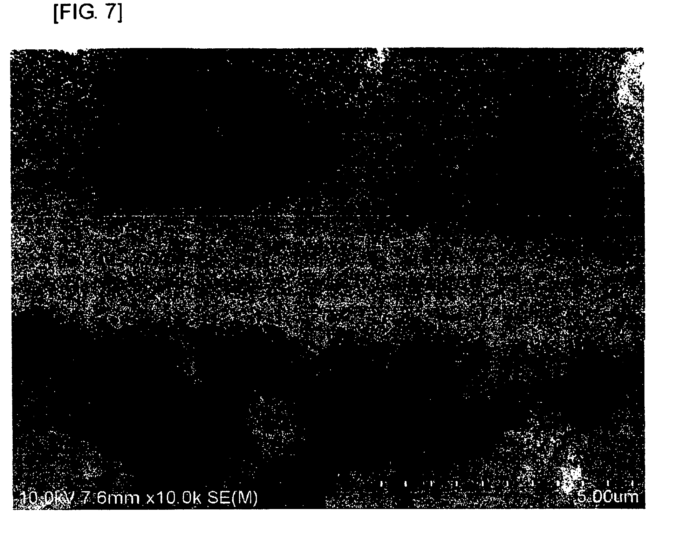

Figure 7 is a photomicrograph of the obtained product, when taken using a scanning electron microscope. As can be clearly seen from Figure 7, production of carbon nanotubes on a surface of the wollastonite was confirmed.
Also, the obtained product was subjected to thermal analysis, confirming that the wollastonite surface was loaded with about 10 % by weight of the carbon nanotubes.

## Claims

1. A carbon nanotube-loaded inorganic particle **characterized in that** a surface of an inorganic particle is loaded with carbon nanotubes.

2. The carbon nanotube-loaded inorganic particle as recited in claim 1, **characterized in that** the inorganic particle is a fibrous or platy inorganic particle.

3. The carbon nanotube-loaded inorganic particle as recited in claim 1 or 2, **characterized in that** the inorganic particle is a metal oxide.

4. The carbon nanotube-loaded inorganic particle as recited in any one of claims 1 - 3, **characterized in that** the inorganic particle or metal oxide particle is a fibrous or platy potassium titanate or wollastonite.

5. A resin composition **characterized in that** it contains the carbon nanotube-loaded inorganic particle as recited in any one of claims 1 - 4.

6. A method for production of a carbon nanotube-loaded inorganic particle **characterized in that** it comprises the steps of:
contacting an inorganic particle with a metal compound as a catalyst for production of carbon nanotubes to deposit the catalyst on a surface of the inorganic particle;
heating the catalyst-deposited inorganic particle to 500 °C - 1, 000 °C and concurrently contacting it with a hydrocarbon or carbon monoxide to produce carbon nanotubes on the surface of the inorganic particle; and
subsequent to production of the carbon nanotubes, cooling to 500 °C or below.

7. The method for production of a carbon nanotube-loaded inorganic particle as recited in claim 6, **characterized in that** the carbon nanotubes are produced by a CVD process using a high polymer as a hydrocarbon source.

8. The method for production of a carbon nanotube-loaded inorganic particle as recited in claim 6, **characterized in that** the carbon nanotubes are produced by heating the inorganic particle by a combustion reaction of a hydrocarbon and an oxygen-containing gas and concurrently contacting the inorganic particle with the hydrocarbon or carbon monoxide.
